Europäisches Patentamt

**European Patent Office**

**Office européen des brevets**

(11) Numéro de publication : **0 015 787**
**B2**

(19)

(12) NOUVEAU FASCICULE DE BREVET EUROPÉEN

(45) Date de publication du nouveau fascicule du brevet :
20.01.88

(51) Int. Cl.⁴ : **B 23 Q   1/00**, B 23 D  41/04

(21) Numéro de dépôt : **80400072.7**

(22) Date de dépôt : **17.01.80**

(54) **Dispositif pour le changement rapide des outils, notamment sur machine de grandes dimensions.**

(30) Priorité : 14.02.79 FR 7903775

(43) Date de publication de la demande :
17.09.80 Bulletin 80/19

(45) Mention de la délivrance du brevet :
09.03.83 Bulletin 83/10

(45) Mention de la décision concernant l'opposition :
20.01.88 Bulletin 88/03

(84) Etats contractants désignés :
**DE GB IT**

(56) Documents cités :
**DE-A- 2 045 604**
**DE-A- 2 212 875**
**DE-A- 2 257 151**
**DE-A- 2 260 914**
**FR-A- 2 107 710**
**FR-A- 2 243 778**
**FR-A- 2 250 597**
**FR-A- 2 302 165**
**GB-A-   432 528**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Prat, Serge**
**12, Avenue des Champs Lasnier**
**F-91440 Bures s/Yvette (FR)**

(74) Mandataire : **Ancel, Roger et al**
**R.N.U.R Service 0804 Boîte postale 103**
**F-92109 Boulogne-Billancourt (FR)**

## Description

La présente invention se rapporte à un dispositif de positionnement et de bridage rapide sur une table mobile de machine d'un ensemble tel qu'un porte-outil solidaire d'une plaque, du type comportant une pluralité d'ensembles de bridage constitués chacun par une tête de bridage se déplaçant perpendiculairement à la table avec un rappel élastique en position rétractée, chacun desdits ensembles étant encastré dans un des deux organes, table et plaque, tandis que l'autre de ces deux organes comporte une courte rainure en T permettant l'accrochage de la tête de bridage et débouchant dans une ouverture de plus grande dimension, permettant le dégagement axial de cette tête de bridage. Elle s'applique notamment à des brocheuses d'extérieur verticales ou horizontales.

On effectue habituellement la fixation des outils ou porte-outils par boulonnage à l'aide de plusieurs dizaines de vis et des lardons dans des rainures en T suivant la norme DIN 650. Ce mode de fixation ne permet pas un changement rapide des porte-outils et des outils, ce qui entraîne un temps d'arrêt machine de longue durée qui, dans le cas d'une machine de forte production, pénalise d'une manière importante le rendement de la machine et augmente de ce fait le prix de revient de l'usinage de la pièce à l'opération considérée. Par ailleurs, cette solution habituelle nécessite une intervention humaine à proximité directe des arêtes tranchantes des outils coupants, pour manipuler des masses importantes dans des positions souvent instables et inconfortables, ce qui entraîne des risques d'accidents.

Le document FR-A-2.107.710 décrit un dispositif de remplacement et d'alignement automatiques de dispositif porte-outils, comprenant des têtes de bridage à rappel élastique en position rétractée pour l'accrochage dans une rainure en T ménagée dans le porte-outil et des butées de positionnement. Ces têtes de bridage sont solidaires d'un piston de bridage qui se déplace dans un cylindre pour permettre son actionnement dans le sens de la sortie de la tête de bridage par une pression de fluide. Le positionnement des têtes de bridage dans la rainure en T qui est de forme annulaire s'effectue par rotation. Le dispositif que décrit ce document ne peut être adapté à des machines de grandes dimensions telles que des brocheuses.

La présente invention a pour but de fournir un dispositif de positionnement et de bridage automatiques de porte-outils adapté à des machines de grandes dimensions. Elle élimine les inconvénients des dispositifs connus en réduisant les temps d'arrêt des machines dus aux changements des porte-outils et des outils coupants, et en limitant l'intervention humaine directe afin de réduire les risques d'accidents.

Le dispositif selon l'invention est caractérisé par le fait qu'il comporte d'une part, un piston de bridage solidaire de chacune des têtes de bridage et se déplaçant dans un cylindre pour permettre son actionnement dans le sens de la sortie de la tête de bridage par une pression de fluide, lesdites rainures en T et lesdites ouvertures étant toutes entièrement solidaires dudit autre de ces deux organes et contenues dans un plan parallèle à la table, toutes ces rainures en T étant orientées dans une même direction de référence par rapport aux ouvertures correspondantes de manière que le libre dégagement des têtes après débridage et leur libre engagement précédant le bridage soient obtenus par déplacement d'ensemble de ladite plaque par rapport à la table dans ladite direction de référence et dans la direction opposée, d'autre part, au moins une butée de positionnement de ladite plaque dans le sens perpendiculaire à ladite direction de référence, disposée de telle manière que les ouvertures d'un desdits organes ainsi que les rainures en T correspondantes se trouvent au niveau des têtes de bridage correspondantes, au moins une butée de prépositionnement de cette même plaque dans le sens de ladite direction de référence positionnée de telle manière que lorsque ladite plaque est en butée contre ladite butée de prépositionnement, lesdites ouvertures se présentent en face des têtes de bridage correspondantes, enfin au moins une butée ou règle de dégauchissage agissant dans le sens opposé à la précédente et disposée de telle manière que lorsque la plaque est en butée contre la règle de dégauchissage, lesdites rainures sont engagées sur lesdites têtes de bridage.

D'autres particularités de l'invention apparaîtront dans la description qui va suivre d'un mode de réalisation pris comme exemple et représenté sur les dessins annexés, sur lequel :

— la figure 1 est une coupe verticale de la machine,

— les figures 2 et 3 sont respectivement une vue de face en élévation et une vue en plan de la machine,

— la figure 4 est une vue partielle à plus grande échelle d'un fragment de la figure 2 avec coupe partielle,

— la figure 5 est une coupe verticale selon V-Vᵢ de la figure 4.

— la figure 6 est une coupe horizontale à plus grande échelle d'une des butées de prépositionnement horizontale,

— la figure 7 est une coupe verticale de la butée de positionnement verticale,

— la figure 8 est une coupe horizontale d'un des dispositifs de désaccouplement,

— les figures 9 et 10 sont des vues correspondant aux fig. 2 et 3 dans le cas d'une mise en place manuelle.

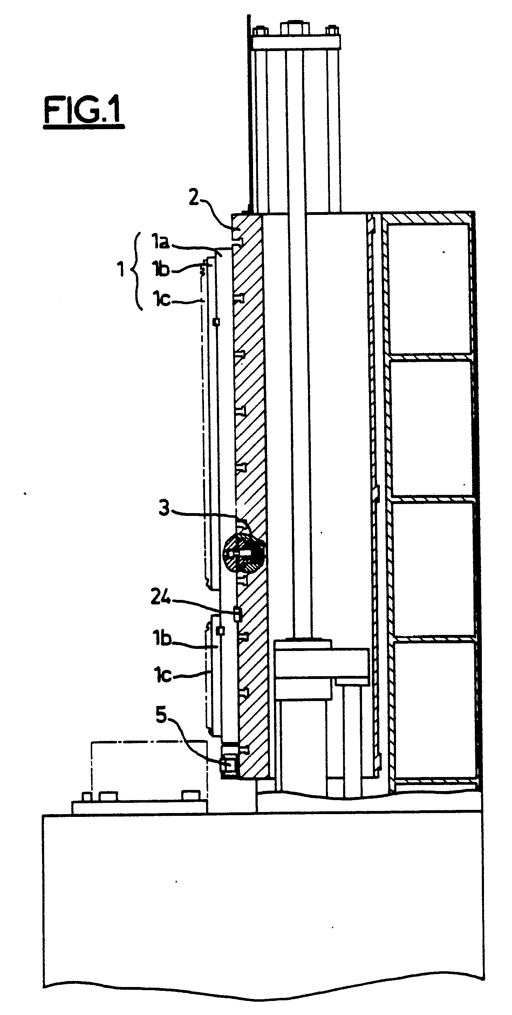

On voit sur la fig. 1 l'ensemble 1, composé de la plaque intermédiaire 1a, des porte-outils 1b et des outils coupants 1c, qui est à monter et à démonter du coulisseau 2 de la machine lors des arrêts de cette machine pour changement des outils ou pour changement de rafales de pièces à usiner. Sur cette figure, une coupe partielle fait apparaître un des points multiples de bridage 3 de l'ensemble 1 sur le coulisseau 2.

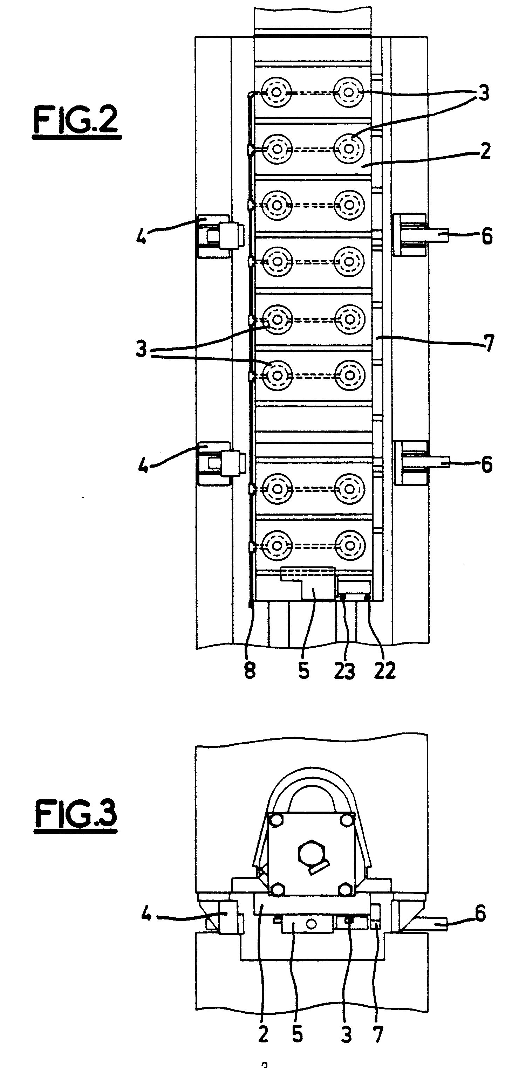

On voit sur la fig. 2 la distribution de ces divers points multiples de bridage 3, ainsi que des butées 4 de prépositionnement et de mise en place par vérin hydraulique dans le sens horizontal et la butée 5 de positionnement dans le sens vertical. On voit également les vérins 6 utilisés lors du désaccouplement du porte-outil 1. Le débridage simultané des points multiples de serrage 3 est obtenu hydrauliquement par un branchement à raccord rapide 8 sur une alimentation, seulement lors de l'arrêt du coulisseau.

On voit également sur les fig. 2 et 3 la règle de dégauchissage 7 solidaire du coulisseau 2 et contre laquelle les butées à commande hydraulique 4 viennent positionner le porte-outil 1a.

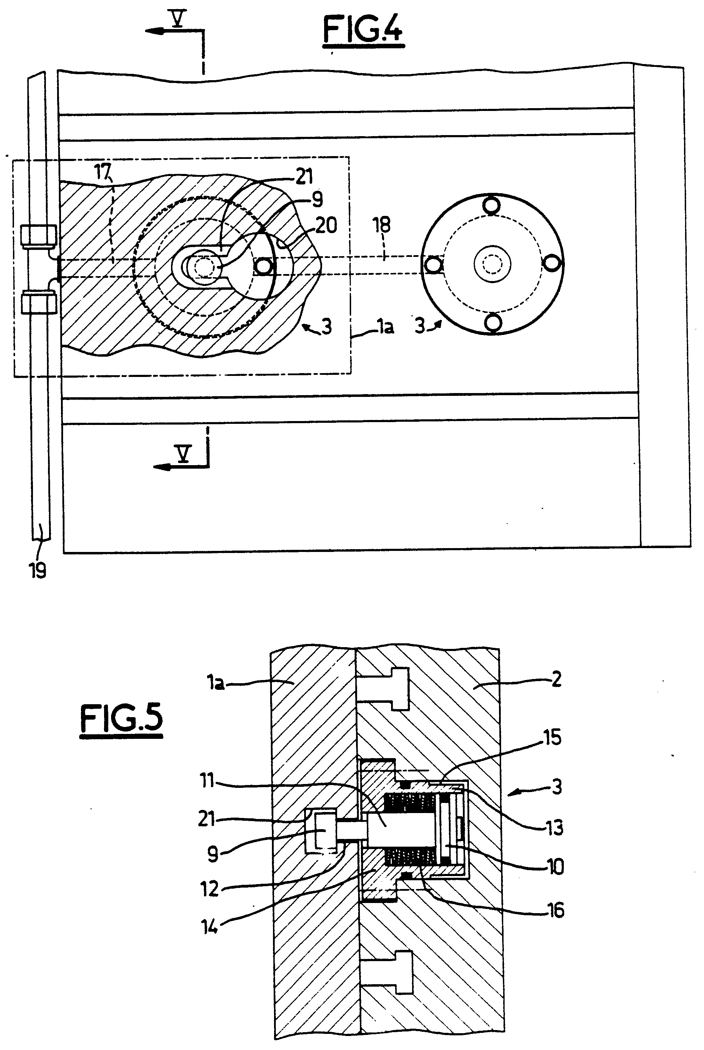

Les fig. 4 et 5 montrent en détail la constitution des dispositifs de bridage et de débridage 3 selon l'invention. Chacun de ces dispositifs, au nombre de seize dans l'exemple choisi, comporte une tête 9 solidaire d'un piston hydraulique 10 grâce à une tige de piston 11 séparée de la tête 9 par une gorge 12. Le piston 10 coulisse de manière étanche dans la jupe cylindrique 13 d'une tête de cylindre 14 fixée au moyen de vis à l'entrée d'un alvéole 15 usiné dans le coulisseau 2. Un empilement de rondelles élastiques 16 interposées entre le piston 10 et la tête de cylindre 14 assure la force de bridage nécessaire et le fond du cylindre, situé entre le piston 10 et le fond de l'alvéole 15, est alimenté en huile à partir de trous de passage 17 ou 18 (fig. 4) à l'aide d'un jeu visible sur la fig. 5 et ménagé à la périphérie de la jupe 13. Des tuyauteries 19 raccordent ces divers trous de passage au raccord rapide 8 mentionné précédemment.

Par ailleurs, dans la plaque intermédiaire 1a et à l'emplacement correspondant à chacun des dispositifs de bridage 3 est usiné un trou cylindrique 20 permettant le libre passage axial avec grande tolérance de la tête 9. Sur un côté de chaque trou 20, le même côté pour chacun d'eux, qui est le côté gauche de la figure dans l'exemple choisi, est usinée une courte rainure en T 21 qui débouche dans le trou 20 et permet l'accrochage de la tête 9.

Les deux butées de prépositionnement horizontales 4 et la butée de positionnement verticale 5 sont disposées, les deux premières sur le bâti fixe de la machine en regard de la position haute du coulisseau 2, et la dernière sur ce même coulisseau de telle manière que, lorsque la plaque intermédiaire 1a est en butée verticale et horizontale contre ces butées, tous les orifices 20 viennent se placer automatiquement en face de toutes les têtes correspondantes 9. Au contraire, lorsque cette plaque intermédiaire 1a est en butée contre la règle de dégauchissage 7, toutes les têtes de bridage 9 sont accrochées dans leurs rainures 21 respectives comme représenté sur les fig. 4 et 5.

Pour assurer un changement complet de l'ensemble 1 et son remplacement par un nouvel ensemble, on commence par amener le coulisseau 2 de la machine en position haute, puis on élingue l'ensemble 1 pour une prise en charge ultérieure par un engin de manutention et on effectue le branchement hydraulique du raccord rapide 8 afin d'envoyer la pression d'huile nécessaire au débridage simultané de toutes les têtes 9. L'ensemble 1 repose alors sur sa butée 5.

On commande ensuite l'avance des vérins des butées 6 qui sont fixés sur le bâti de la machine de manière que l'ensemble 1, poussé vers la gauche des figures par les poussoirs 6a, se déplace jusqu'à venir contre les butées 4 ce qui place par conséquent les lumières de dégagement 20 en face des têtes 9. L'ensemble 1 est alors libéré et peut être emporté par un engin de manutention après avoir reculé les poussoirs 6a des vérins 6.

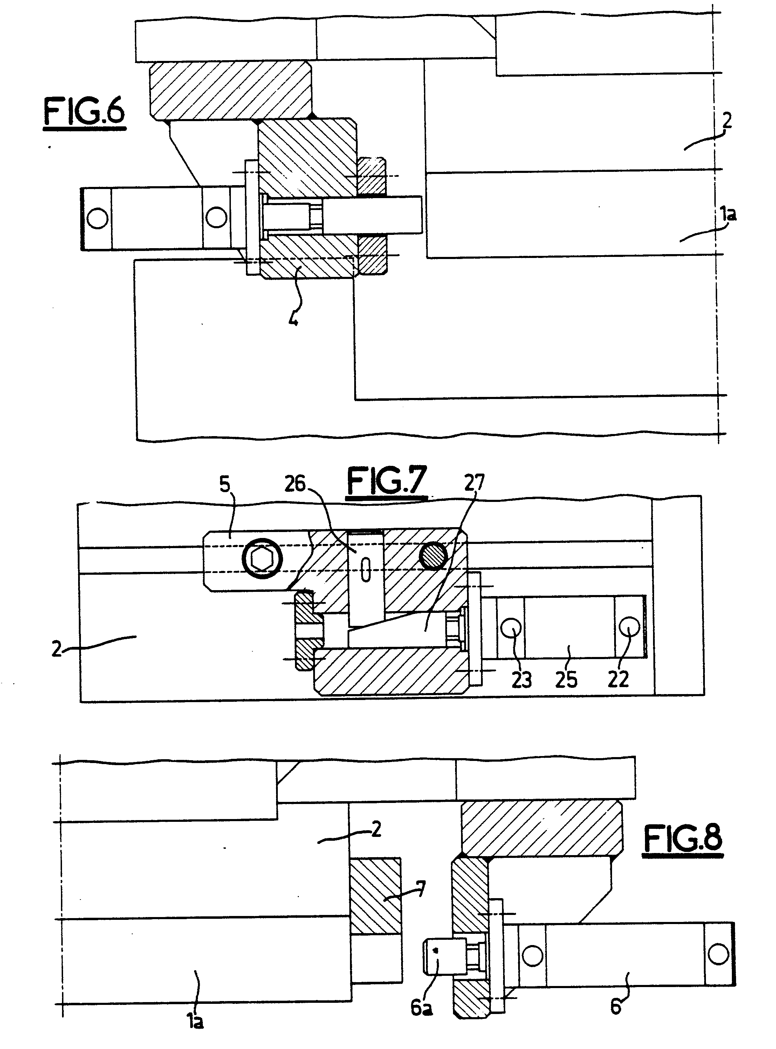

On présente alors le nouvel ensemble 1 en l'amenant contre les butées 4 et sur la butée 5. Après avoir branché le vérin hydraulique de la butée 5 par ses raccords rapides 22 et 23 (fig. 2 et 7), on commande son avance afin d'amener l'ensemble 1 contre la clavette d'entraînement 24 visible sur la fig. 1. Ce mouvement demande une certaine précision, c'est pourquoi la butée 5 comporte un vérin 25 qui agit sur un poussoir vertical 26 par l'intermédiaire d'une démultiplication à coin 27. On commande alors les vérins de butée 47 qui ont un raccordement hydraulique permanent avec la machine afin d'amener l'ensemble 1 contre la règle de dégauchissage 7 par coulissement le long de la clavette horizontale 24. L'ensemble 1 est alors en position correcte. Il suffit de débrancher le raccord rapide 8 pour assurer le bridage de l'ensemble 1 sur le coulisseau 2 simultanément par tous les points multiples 3. Une fois ce bridage assuré, on commande le retour des vérins des butées 4 et 5 en position de dégagement et on débranche les raccords rapides 22 et 23. La machine est alors de nouveau prête à fonctionner.

Grâce à ce dispositif on supprime pratiquement toutes les opérations manuelles, hormis les raccordements hydrauliques rapides 8, 22, 23, et par conséquent les risques correspondants.

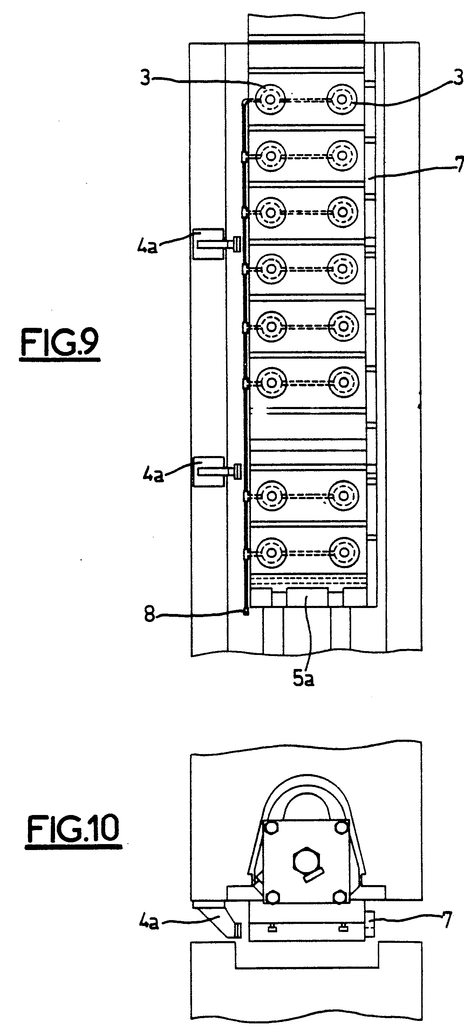

Toutefois, dans le cas où le porte-outil utilisé est d'un poids et d'un encombrement modérés le rendant plus facilement manipulable, les butées de prépositionnement 4 et de positionnement 5 peuvent être dépourvues de vérins et remplacées par conséquent par des équerres fixes 4a et 5a, et les butées de démontage 6 supprimées, comme dans la variante de réalisation représentée sur les fig. 9 et 10. Dans ce cas, le ripage horizontal d'engagement et de dégagement des têtes de bridage se fait par une action manuelle et seul le bridage à points multiples reste automatique.

A titre de variante il est également possible de placer les blocs de bridage 3 dans la plaque intermédiaire 1a, ou encore dans le porte-outil 1b si ce dernier est monté directement sur le coulisseau 2, et les rainures d'accrochage 21 sont alors placées sur le coulisseau. Enfin, le dispositif de bridage peut être utilisé pour la fixation de montage d'usinage sur toutes les tables de machine, quelle que soit leur orientation, par exemple lorsqu'il est nécessaire de changer les montages d'usinage pour un travail par rafales de différents types de pièces à usiner.

## Revendications

1. Dispositif de positionnement et de bridage rapide sur une table mobile (2) de machine d'un ensemble tel qu'un porte-outil (1b) solidaire d'une plaque (1a), du type comportant une multitude d'ensembles de bridage (3) constitués chacun par une tête de bridage (9) se déplaçant perpendiculairement à la table (2) avec un rappel élastique en position rétractée, chacun desdits ensembles étant encastré dans un des deux organes, table (2) et plaque (1a), tandis que l'autre de ces deux organes comporte une courte rainure en T (21) permettant l'accrochage de la tête de bridage (9) et débouchant dans une ouverture de plus grande dimension (20) permettant le dégagement axial de cette tête de bridage, caractérisé par le fait qu'il comporte :

— d'une part, un piston de bridage (10) solidaire de chacune des têtes de bridage (9) et se déplaçant dans un cylindre (13) pour permettre son actionnement dans le sens de la sortie de la tête de bridage (9) par une pression de fluide, lesdites rainures en T (21) et lesdites ouvertures (20) étant toutes entièrement solidaires dudit autre de ces deux organes et contenues dans un plan parallèle à la table (2), toutes ces rainures en T (21) étant orientées dans une même direction de référence par rapport aux ouvertures (20) correspondantes, de manière que le libre dégagement des têtes (9) après débridage et leur libre engagement précédant le bridage soient obtenus par déplacement d'ensemble de ladite plaque (1a) par rapport à la table (2) dans ladite direction de référence et dans la direction opposée,

— d'autre part, au moins une butée de positionnement (5) de ladite plaque (1a) dans le sens perpendiculaire à ladite direction de référence, disposée de telle manière que les ouvertures (20) d'un desdits organes ainsi que les rainures en T (21) correspondantes se trouvent au niveau des têtes de bridage (9) correspondantes, au moins une butée de prépositionnement (4) de cette même plaque dans le sens de ladite direction de référence positionnée de telle manière que lorsque ladite plaque (1a) est en butée contre ladite butée de prépositionnement (4), lesdites ouvertures (20) se présentent en face des têtes de bridage (9) correspondantes, enfin au moins une butée ou règle de dégauchissage (7) agissant dans le sens opposé à la précédente et disposée de telle manière que lorsque la plaque est en butée contre la règle de dégauchissage, lesdites rainures (21) sont engagées sur lesdites têtes de bridage (9).

2. Dispositif selon la revendication 1, caractérisé par le fait que ladite butée de positionnement (5) comporte un vérin (25) à action démultipliée (7/26) permettant l'amenée en position correcte d'un des organes (1a, 2) par rapport à l'autre pour assurer l'engagement mutuel d'une clavette d'entraînement rectiligne (24) de type connu disposée dans le sens de ladite direction de référence.

3. Dispositif selon la revendication 2, caractérisé par le fait qu'il comporte au moins un vérin, de préférence intégré à chaque butée de prépositionnement (4), pour pousser ladite plaque (1a) contre ladite règle de dégauchissage (7) par coulissement contre la butée de positionnement (6) et le long de ladite clavette d'entraînement (24), et au moins un vérin de dégagement (6) agissant sur ladite plaque dans le sens opposé.

4. Dispositif selon la revendication 3 caractérisé par le fait que la ou les butées de prépositionnement (4) ainsi que le ou les vérins correspondants, et également les vérins de dégagement (6) et les poussoirs (6a) correspondants sont disposés à poste fixe sur la machine en regard d'une position privilégiée de ladite table, de préférence une position extrême, les divers vérins (4, 6) étant raccordés hydrauliquement par des canalisations permanentes, tandis que le vérin (25) du dispositif de positionnement (5) et les vérins des dispositifs de bridage (3) sont solidaires de l'un des deux organes mobiles, table (2) et plaque (1a), et raccordés hydrauliquement d'une manière temporaire par des raccords hydrauliques rapides (8, 22, 23).

## Claims

1. A device for quickly positioning and clamping on a movable machine table (2) an assembly such as a tool-holder (1b) integral with a plate (1a), of the type comprising a plurality of clamping assemblies (3) constituted each by a clamping head (9) displaceable perpendicularly to the table (2) with elastic drawback means for returning the head to its retracted position, each one of said assemblies being embedded in one of the organs constituting the table (2) and the plate (1a), while the other one of said organs is provided with a short T-shaped groove (21) allowing the clamping head (9) to be hooked, said groove opening into an aperture having greater dimensions (20) which allows for axial disengagement of said clamping head, characterized in that it comprises :

— on the one hand, a clamping piston (10) integral with each one of the clamping heads (9) and movably mounted in a cylinder (13) so as to be able to be actuated in the direction corresponding to the disengagement of the clamping head (9) by a fluid pressure, said T-shaped grooves (21) and said apertures (20) being all entirely integral with said other of these two organs and located in a plane parallel to the table (2), all these T-shaped grooves being oriented in an equal reference direction with respect to the corresponding apertures (20), in such a manner that the free disengagement of the heads (9) after unclamping and their free engagement prior to clamping is obtained by the common displacement of said plate (1a) with respect to the table (2) in said reference direction and in the opposite direction.

— on the other hand, at least one positioning stop (5) for positioning said plate (1a) in the direction perpendicular to said reference direction, arranged in such a manner that the apertures of one of said organs and the corresponding T-shaped grooves (21) are located at the level of the corresponding clamping heads (9), at least one pre-positioning stop (4) for pre-positioning the said plate in said reference direction so that when said plate (1a) engages said pre-positioning stop (4) said apertures (20) are facing the corresponding clamping heads (9), and at least one straightening stop or rule (7) acting in the direction opposed to the preceding one and arranged in such a manner that when the plate engages the straightening rule said grooves (21) are engaged on said clamping heads (9).

2. A device according to claim 1, characterized in that said positioning stop (5) comprises a demultiplied action (7/26) jack (25) allowing one of said organs (1a, 2) to be brought to a correct position with respect to the other organ for ensuring mutual engagement of a rectilinear actuating key (24) of a type know per se, which is disposed so as to be oriented in said reference direction.

3. A device according to claim 2, characterized in that it comprises at least one jack, preferably integrated in each pre-positioning stop (4), for pushing said plate (1a) against said straightening rule (7) by sliding against the positioning stop (6) and along said actuating key (24), and at least one disengaging jack (6) acting on said plate in the opposite direction.

4. A device according to claim 3, characterized in that the pre-positioning stop or stops (4) and the corresponding jack or jacks, as well as the disengaging jacks (6) and the corresponding push-members (6a) are fixedly mounted on the machine, facing a privileged position of said table, preferably an extreme position, the various jacks (4, 6) being hydraulically connected by permanent conduits, while the jack (25) of the positioning device (5) and the jacks of the clamping devices (3) are integral with one of the movable organs constituted by the table (2) and the plate (1a), and are hydraulically connected in a temporary manner by quick-acting hydraulic connectors (8, 22, 23).

**Patentansprüche**

1. Einrichtung zum schnellen Ausrichten und Einspannen einer Vorrichtung, wie eines mit einer Platte (1a) fest verbundenen Werkzeugträgers (1b) auf einem zu einer Maschine gehörigen beweglichen Tisch (2), mit einer Mehrzahl von Einspannvorrichtungen (3) deren jede aus einem Einspannkopf (9) besteht, welcher sich senkrecht zum Tisch (2) bewegt und durch elastische Rückstellmittel in ihre zurückgezogene Lage gebracht wird, wobei jede Einspannvorrichtung in einem der beiden den Tisch (2) bzw. die Platte (1a) bildenden Organe eingefügt ist, während das andere dieser beiden Organe eine kurze T-Nut (21) aufweist, die das Einhaken des Einspannkopfes (9) gestattet und in eine Öffnung grösserer Abmessungen (20) mündet, die ein axiales Lösen dieses Einspannkopfes gestattet, dadurch gekennzeichnet, dass sie folgende Bauteile umfasst :

— einerseits einen Einspannkolben (10), der mit jedem der Einspannköpfe (9) fest verbunden und in einem Zylinder (13) beweglich ist, um seine Betätigung durch von einem Medium ausgeübten Druck in der dem Austreten des Einspannkopfes (9) entsprechenden Richtung zu ermöglichen, wobei die T-Nute (21) und die Öffnungen (20) ausnahmslos völlig fest verbunden sind mit dem anderen der genannten beiden Organe und in einer zum Tisch (2) parallelen Ebene liegen, und wobei alle T-Nute (21) in bezug auf die entsprechenden Öffnungen (20) in einer gemeinsamen Bezugsrichtung ausgerichtet sind, derart, dass ein freies Lösen der Köpfe (9) nach dem Losspannen, sowie ihr freies Einsetzen vor dem Spannen durch eine Bewegung der gesamten Platte (1a) in bezug auf den Tisch (2) in der genannten Bezugsrichtung und in der entgegengesetzten Richtung erzielt wird,

— andererseits wenigstens einen Einstellanschlag (5) zum Einstellen der Platte (1a) in einer zur genannten Bezugsrichtung senkrechten Richtung, derart angeordnet, dass die Öffnungen (20) eines der genannten Organe, sowie die entsprechenden T-Nute (21) auf dem Niveau der entsprechenden Einspannköpfe (9) liegen, wobei wenigstens ein Voreinstellanschlag (4) zum Voreinstellen dieser Platte in einer der Bezugsrichtung entsprechenden Richtung derart angeordnet ist, dass, wenn die Platte (1a) an dem Voreinstellanschlag (4) anliegt, die Öffnungen (20) den entsprechenden Einspannköpfen (9) gegenüberliegen, während ferner wenigstens eine Ausrichtanschlagleiste (7) vorgesehen ist, die in einer der vorgenannten Richtung entgegengesetzten Richtung wirkt und derart angeordnet ist, dass, wenn die Platte an der Ausrichtanschlagleiste anliegt, die Nute (21) die genannten Einspannköpfe (9) umfassen.

2. Einrichtung nach Anspruch 1, dadurch gekennzeichnet, dass der Einstellanschlag (5) einen mit Untersetzung (7/26) arbeitenden Presstopf (25) aufweist, der es gestattet, eines der Organe (1a, 2) in bezug auf das andere in die geeignete Lage zu bringen, um das gegenseitige Eingreifen eines an sich bekannten geradlinigen Mitnehmerkeils (24) zu bewirken, der in einer der Bezugsrichtung entsprechenden Richtung angeordnet ist.

3. Einrichtung nach Anspruch 2, dadurch gekennzeichnet, dass sie wenigstens eine, vorzugsweise mit jedem Voreinstellanschlag (4) fest verbundenen Presstopf aufweist, um die Platte (1a) durch Gleiten an dem Einstellanschlag (6) und längs des Mitnehmerkeils (24) gegen die Ausrichtanschlagleiste (7) zu drücken, sowie wenigstens einen auf die genannten Platte in entgegengesetzter Richtung wirkenden Lösepresstopf (6) besitzt.

4. Einrichtung nach Anspruch 3, dadurch gekennzeichnet, dass der bzw. die Voreinstellanschlag bzw. -anschläge (4), sowie der bzw. die entsprechende(n) Presstopf bzw. -töpfe, und ferner die Lösepresstöpfe (6) und die entsprechenden Stössel (6a) an der Maschine ortsfest in einer Stellung angebracht sind, in welcher sie einer bevorzugten Lage, und zwar vorzugsweise einer Endlage, des Tisches gegenüberliegen, wobei die verschiedenen Presstöpfe (4, 6) über dauernde Leitungen hydraulisch angeschlossen sind, während der Presstopf (25) der Einstellvorrichtung, sowie die Presstöpfe der Einspannvorrichtungen (3) mit einem der beiden, den Tisch (2) bzw. die Platte (1a) bildenden Organe fest verbunden und lösbar über hydraulische Schnell-Anschlusselemente (8, 22, 23) hydraulisch angeschlossen sind.

FIG.1

0 015 787

0 015 787

FIG.2

FIG.3

## FIG.4

## FIG.5

**FIG.6**

**FIG.7**

**FIG.8**

FIG.9

FIG.10